# EUROPEAN PATENT APPLICATION

(11) **EP 4 492 315 A1**
(43) Date of publication of application: **15.01.2025**
(21) Application number: 23766643.3
(22) Date of filing: 28.02.2023
(51) Int. Cl.: G06Q 30/0283, B60L 53/12, B60L 53/68, B60M 7/00, G06Q 30/06, G08G 1/09, G16Y 10/40, G16Y 20/20, G16Y 40/10, H02J 7/00, H02J 13/00, H02J 50/10

(54) **NONCONTACT POWER SUPPLY SYSTEM, SERVER, AND USAGE FEE CALCULATION METHOD FOR NONCONTACT POWER SUPPLY SYSTEM**

(30) Priority: 07.03.2022 JP 2022034840
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); TANI, Keisuke, Kariya-shi, Aichi 448-8661 (JP); KANESAKI, Masaki, Kariya-shi, Aichi 448-8661 (JP); YAMAGUCHI, Nobuhisa, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: D Young & Co LLP
(86) International application number: PCT/JP2023/007377
(87) International publication number: WO 2023/171465

(57) **Abstract**

A noncontact power supply system 100 is provided with a mobile unit 3, a ground power supply apparatus 2 configured to be able to supply power by noncontact to the mobile unit 3 and a server 1 configured to be able to communicate with the mobile unit 3 and the ground power supply apparatus 2 respectively. The server 1 is configured to obtain a grasp of the number of times of utilization of the ground power supply apparatus 2 by the mobile unit 3 based on information received from at least one of the mobile unit 3 or the ground power supply apparatus 2 and calculate a fee for system utilization of the noncontact power supply system 100 by the mobile unit 3 based on the number of times of utilization.

## Description

### FIELD

The present invention relates to a noncontact power supply system, server, and method of calculation of a utilization fee of a noncontact power supply system.

### BACKGROUND

JP2018-157686A discloses a noncontact power supply system which utilizes a transmission system such as magnetic field coupling (electromagnetic induction), electric field coupling, magnetic field resonant coupling (magnetic field resonance), and electric field resonant coupling (electric field resonance) to transmit electric power from a ground power supply apparatus provided on the ground to a running vehicle by noncontact.

### SUMMARY

In a noncontact power supply system, an amount of electric power transmitted by a ground power supply apparatus side and an amount of electric power received by a vehicle side will not match, so if trying to calculate a fee for system utilization when utilizing the noncontact power supply system (money, points, tickets, or other consideration for system utilization, including electricity fees, to be paid by system user) in accordance with the amount of electric power utilized by a system user, there is the problem of whether to make the amount of electric power utilized the amount of electric power transmitted or make it the amount of electric power received and also the problem that inherently it is difficult to obtain an accurate grasp of the amount of electric power utilized. Therefore, how to calculate the fee for system utilization (electricity fee) when utilizing a noncontact power supply system becomes a problem.

The present invention was made focusing on such a problem and has as its object to enable calculation of the fee for system utilization when utilizing a noncontact power supply system even without obtaining an accurate grasp of the amount of electric power utilized.

To solve the above problem, a noncontact power supply system according to one aspect of the present invention comprises a mobile unit, a ground power supply apparatus configured to be able to supply power by noncontact to the mobile unit, and a server configured to be able to communicate with the mobile unit and the ground power supply apparatus respectively. Further, the server is configured so as to obtain a grasp of the number of times of utilization of the ground power supply apparatus by the mobile unit based on information received from at least one of the mobile unit or the ground power supply apparatus and calculate a fee for system utilization of the noncontact power supply system by the mobile unit based on the number of times of utilization.

Further, the server according to another aspect of the present invention comprises a processing part and a communication part configured to communicate with a mobile unit and ground power supply apparatus forming a noncontact power supply system respectively. Further, the processing part is configured to obtain a grasp of the number of times of utilization of the ground power supply apparatus by the mobile unit based on information received from at least one of the mobile unit or the ground power supply apparatus and calculate a fee for system utilization of the noncontact power supply system by the mobile unit based on the number of times of utilization.

Further, a method of calculation of a utilization fee of a noncontact power supply system according to another aspect of the present invention is performed by a server able to communicate with a mobile unit and a ground power supply apparatus supplying power by noncontact to the mobile unit respectively and comprises a step of obtaining a grasp of the number of times of utilization of the ground power supply apparatus by the mobile unit based on information received from at least one of the mobile unit or the ground power supply apparatus and a step of calculating a fee for system utilization of the noncontact power supply system by the mobile unit based on the number of times of utilization.

According to these aspects of the present invention, it is possible to calculate a fee for system utilization in accordance with the number of times of utilization of the ground power supply apparatus even if not able to obtain an accurate grasp of the amount of electric power utilized at the time of utilization of the system.

### BRIEF DESCRIPTION OF THE DRAWINGS

FIG. 1 is a schematic view of the configuration of a noncontact power supply system.
FIG. 2 is a view showing one example of the configurations of a ground power supply apparatus and vehicle.
FIG. 3 is a schematic view of the configurations of a power transmission controller and equipment connected to the power transmission controller.
FIG. 4 is a schematic view of the configurations of a vehicle controller and equipment connected to the vehicle controller.
FIG. 5 is an operation sequence diagram for explaining a method of calculation of a fee for system utilization according to a first embodiment of the present invention.
FIG. 6 is an operation sequence diagram for explaining a method of calculation of a fee for system utilization according to a second embodiment of the present invention.
FIG. 7 is an operation sequence diagram for explaining a method of calculation of a fee for system utilization according to a third embodiment of the present invention.
FIG. 8 is a view showing one example of the configuration of a ground power supply apparatus.

### DESCRIPTION OF EMBODIMENTS

Below, embodiments will be explained in detail while referring to the drawings. Note that, in the following explanation, similar component elements will be assigned the same reference notations.

### (First Embodiment)

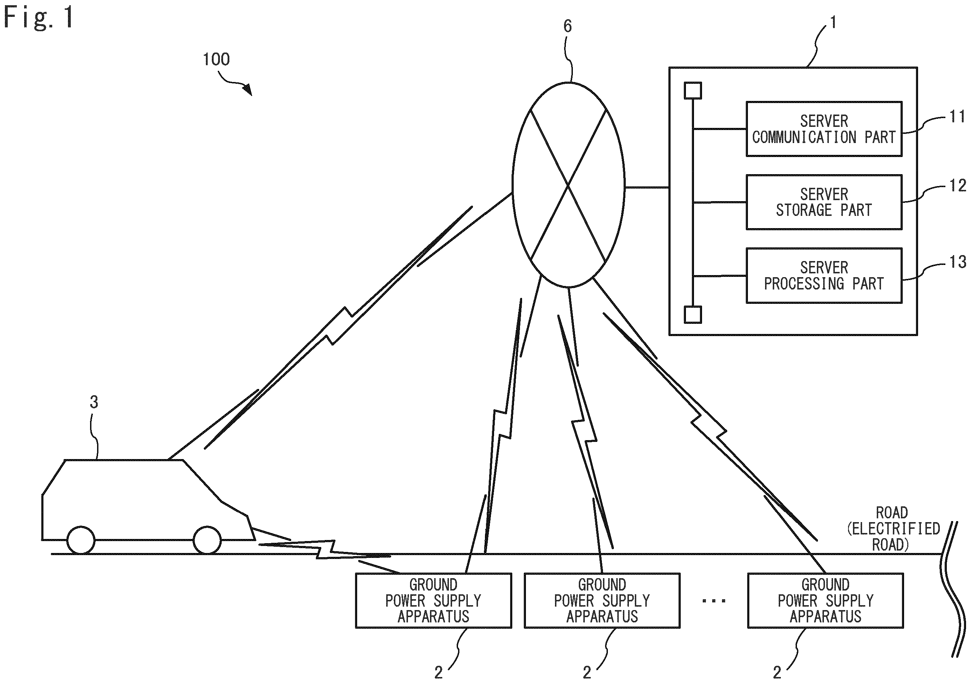

FIG. 1 is a schematic view of the configuration of a noncontact power supply system 100 according to a first embodiment of the present invention.

The noncontact power supply system 100 is provided with a server 1, a ground power supply apparatus 2, and a vehicle 3 as one example of a mobile unit and is configured to be able to supply a running or stopped vehicle 3 obtaining permission of system use with power from the ground power supply apparatus 2 by noncontact using magnetic field resonant coupling (magnetic field resonance). Note that, in FIG. 1, as one example of installation of the ground power supply apparatus 2, the example is shown where ground power supply apparatuses 2 are installed consecutively along the road at predetermined intervals. In the following explanation, a road at which ground power supply apparatuses 2 are installed will be referred to as an "electrified road" in accordance with need.

Note that, in this Description, the term "run" means the state where the vehicle 3 is positioned on the road for running. Therefore, the term "run" includes not only the state where the vehicle 3 is actually running by any speed larger than zero, but also the state where for example it is stopped on the road waiting for a traffic light to change etc.

As shown in FIG. 1, the server 1 is provided with a server communication part 11, server storage part 12, and server processing part 13.

The server communication part 11 has a communication interface circuit for connecting the server 1 to a network 6 and is configured to enable the ground power supply apparatus 2 and the vehicle 3 to communicate through the network 6.

The server storage part 12 has an HDD (hard disk drive) or SSD (solid state drive), optical recording medium, semiconductor memory, or other storage medium and stores various computer programs, data, etc. used for processing at the server processing part 13.

The server processing part 13 has one or more CPUs (central processing units) and their peripheral circuits. The server processing part 13 runs the various computer programs stored in the server storage part 12 and exerts comprehensive control over the overall operations of the server 1. It is, for example, a processor.

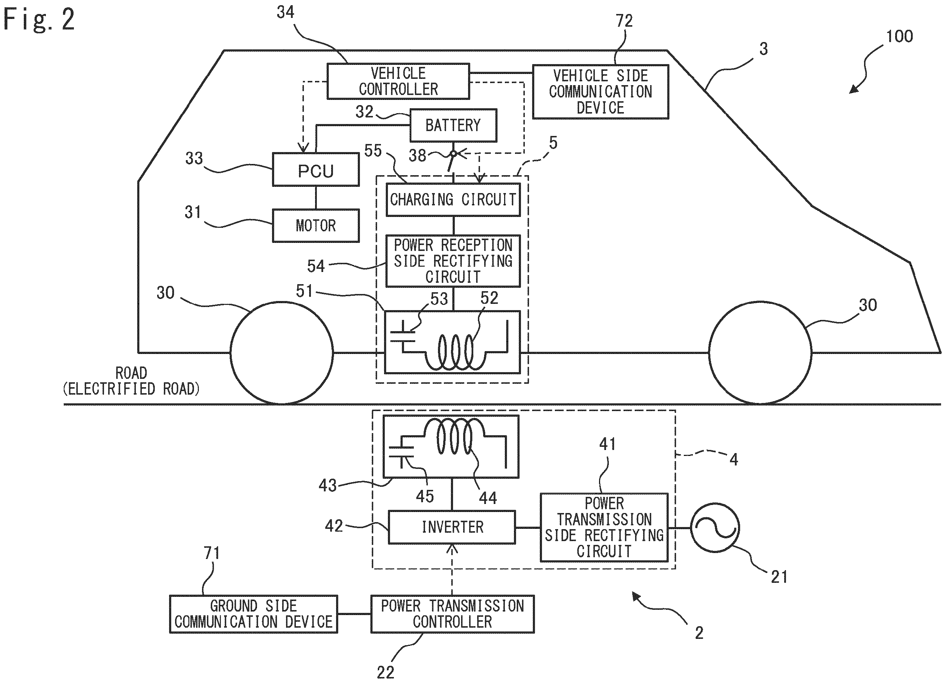

Next, referring to FIG. 2 to FIG. 4, the configurations of the ground power supply apparatus 2 and vehicle 3 according to the present embodiment will be explained. FIG. 2 is a view showing one example of the configurations of the ground power supply apparatus 2 and vehicle 3 according to the present embodiment.

As shown in FIG. 2, the ground power supply apparatus 2 has a ground side communication device 71, power transmission device 4, power source 21, and power transmission controller 22. The ground side communication device 71, power source 21, and power transmission controller 22 may be buried in the road or may be placed at a location other than the road (including on the ground).

The ground side communication device 71 is configured to be able to communicate with the server 1 and the vehicle 3.

In the present embodiment, the ground side communication device 71 is configured to access a wireless base station connected through the network 6, a gateway, etc. to thereby enable connection with the network 6 through the wireless base station. Due to this, wide area wireless communication is performed between the ground side communication device 71 and the server 1. For example, various information required for supplying power to the vehicle 3 by noncontact is swapped. Wide area wireless communication is communication with a longer communication distance compared with the later explained narrow area wireless communication. Specifically, for example, it is communication with a communication distance of from 10 meters to 10 kilometers. As wide area wireless communication, various wireless communication standards with long communication distances can be used. For example, communication based on any communication standards such as 4G, LTE, 5G, WiMAX, etc. formulated by the 3GPP and IEEE is used.

Further, in the present embodiment, the ground side communication device 71 is configured to be able to utilize a predetermined wireless communication channel to engage in narrow area wireless communication directly with a vehicle side communication device 72 mounted in the vehicle 3. Narrow area wireless communication is communication with a shorter communication distance compared with wide area wireless communication. Specifically, for example, it is communication with a communication distance of less than 10 meters. As narrow area wireless communication, various near field communication standards with short communication distances can be used. For example, communication based on any communication standards (for example, Bluetooth (Registered Trademark) or ZigBee (Registered Trademark) ) formulated by the IEEE, ISO, IEC, etc. is used. Further, as technology for narrow area wireless communication, for example, RFID (radio frequency identification), DSRC (dedicated short range communication), etc. are used.

The power source 21 supplies power to the power transmission device 4. The power source 21 is, for example, a commercial AC power source supplying single-phase AC power. Note that, the power source 21 may also be another AC power source supplying three-phase AC power or may be a DC power source such as a fuel cell.

The power transmission device 4 transmits the power supplied from the power source 21 to the vehicle 3. The power transmission device 4 has a power transmission side rectifying circuit 41, inverter 42, and power transmission side resonance circuit 43. In the power transmission device 4, the AC power supplied from the power source 21 is rectified at the power transmission side rectifying circuit 41 and converted to DC current, the DC current is converted to AC current at the inverter 42, and that AC power is supplied to the power transmission side resonance circuit 43.

The power transmission side rectifying circuit 41 is electrically connected to the power source 21 and inverter 42. The power transmission side rectifying circuit 41 rectifies the AC power supplied from the power source 21 to convert it to DC power and supplies the DC power to the inverter 42. The power transmission side rectifying circuit 41 is for example an AC/DC converter.

The inverter 42 is electrically connected to the power transmission side rectifying circuit 41 and power transmission side resonance circuit 43. The inverter 42 converts the DC power supplied from the power transmission side rectifying circuit 41 to AC power of a frequency higher than the AC power of the power source 21 (high frequency power) and supplies the high frequency power to the power transmission side resonance circuit 43.

The power transmission side resonance circuit 43 has a resonator comprised of a coil 44 and capacitor 45. The various parameters of the coil 44 and capacitor 45 (outside diameter and inside diameter of coil 44, number of turns of coil 44, electrostatic capacity of capacitor 45, etc.) are determined so that the resonance frequency of the power transmission side resonance circuit 43 becomes a set value. The predetermined set value is, for example, 10 kHz to 100 GHz, preferably is the 85 kHz determined by the SAE TIR J2954 standard as the frequency band for noncontact power transmission.

The power transmission side resonance circuit 43 is arranged at the center of a lane in which the vehicle 3 passes so that the center of the coil 44 is positioned at the center of the lane. If the high frequency power supplied from the inverter 42 is applied to the power transmission side resonance circuit 43, the power transmission side resonance circuit 43 generates an AC magnetic field for power transmission. Note that, if the power source 21 is a DC power source, the power transmission side rectifying circuit 41 may be omitted.

The power transmission controller 22 performs various control over the ground power supply apparatus 2. For example, the power transmission controller 22 is electrically connected to the inverter 42 of the power transmission device 4 and controls the inverter 42 so as to control the power transmission by the power transmission device 4. Further, the power transmission controller 22 communicates with the server 1 and the vehicle 3 through the ground side communication device 71. Note that the vehicle 3 can be directly communicate with through the ground side communication device 71 and can be indirectly communicated with from the ground side communication device 71 through the server 1.

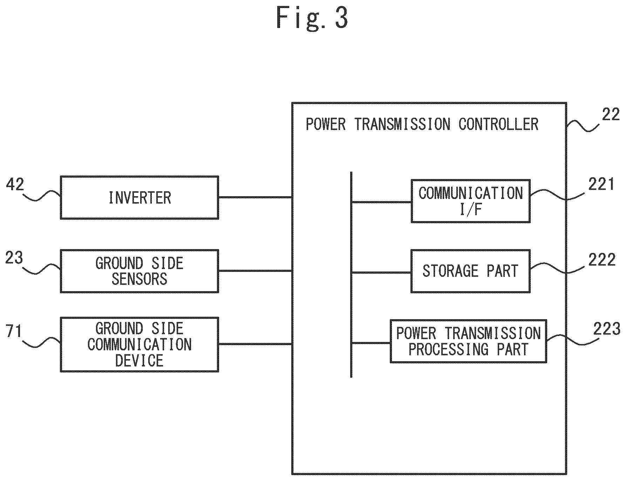

FIG. 3 is a schematic view of the configurations of the power transmission controller 22 and equipment connected to the power transmission controller 22.

The power transmission controller 22 is provided with a communication interface 221, storage part 222, and power transmission processing part 223. The communication interface 221, storage part 222, and power transmission processing part 223 are connected with each other through signal wires.

The communication interface 221 has an interface circuit for connecting the power transmission controller 22 to the various equipment forming the ground power supply apparatus 2 (for example, inverter 42, ground side communication device 71, later explained ground side sensors 23, etc.) The power transmission controller 22 communicates with the various equipment forming the ground power supply apparatus 2 through the communication interface 221.

The storage part 222 has an HDD or SSD, optical recording medium, semiconductor memory, or other storage medium and stores various computer programs, data, etc. used for processing at the power transmission processing part 223.

The power transmission processing part 223 has one or more CPUs (central processing units) and their peripheral circuits. The power transmission processing part 223 runs the various computer programs stored in the storage part 222 and exerts comprehensive control over the overall operations of the ground power supply apparatus 2. It is, for example, a processor.

The power transmission controller 22 has ground side sensors 23 connected to it. The ground side sensors 23, for example, include a power transmission device current sensor for detecting the current flowing through the various parts of the power transmission device 4 (in particular, the power transmission side resonance circuit 43, inverter 42, and power transmission side rectifying circuit 41), a power transmission device voltage sensor for detecting the voltage applied to the various parts of the power transmission device 4, a power transmission device temperature sensor for detecting the temperature of the various parts of the power transmission device 4, a foreign object sensor for detecting a foreign object on the road in which the power transmission device 4 is buried, and a bio sensor for detecting a person or animal on the road at which the power transmission device 4 is buried. The outputs of the ground side sensors 23 are input to the power transmission controller 22.

Returning to FIG. 2, the vehicle 3 has a vehicle side communication device 72, power reception device 5, motor 31, battery 32, power control unit (PCU) 33, and vehicle controller 34. The vehicle 3 according to the present embodiment is a battery electric vehicle (BEV) having only the battery 32 as its source of drive power, but may also be a so-called hybrid vehicle provided with an internal combustion engine or other drive source in addition to the battery 32 (HEV; hybrid electric vehicle or PHEV; plug-in hybrid electric vehicle). The type is not particularly limited.

The vehicle side communication device 72 is configured to be able to communicate with the server 1 and ground power supply apparatus 2. In the present embodiment, the vehicle side communication device 72 is configured to be able to access a wireless base station connected with the network 6 through a gateway etc. and thereby connect with the network 6 through the wireless base station. Due to this, wide area wireless communication is performed between the vehicle side communication device 72 and server 1.

Further, the vehicle side communication device 72 is configured to be able to utilize a predetermined wireless communication channel to directly engage in narrow area wireless communication with the ground side communication device 71 of the ground power supply apparatus 2.

The motor 31 is, for example, an AC synchronous motor and functions as an electric motor and a generator. When functioning as an electric motor, the motor 31 is driven by the power stored in the battery 32 as the drive source. The output of the motor 31 is transmitted through a speed reducer and axle to the wheels 30. On the other hand, when the vehicle 3 is decelerating, the motor 31 is driven by rotation of the wheels 30 whereby the motor 31 functions as a generator to generate regenerative power.

The battery 32 is a rechargeable secondary battery and is, for example, comprised of a lithium ion battery, nickel hydrogen battery, etc. The battery 32 stores the power required for the vehicle 3 to run (for example, drive power of the motor 31). The battery 32 is charged if the power received by the power reception device 5 is supplied to the battery 32. Further, the battery 32 is charged if the regenerative power generated by the motor 31 is supplied to the battery 32. If the battery 32 is charged, the state of charge (SOC) of the battery 32 is restored. Note that, the battery 32 may also be charged by an outside power source other than the ground power supply apparatus 2 through a charging port provided at the vehicle 3.

The PCU 33 is electrically connected to the battery 32 and motor 31. The PCU 33 has an inverter, boost converter, and DC/DC converter. The inverter converts the DC power supplied from the battery 32 to AC power and supplies the AC power to the motor 31. On the other hand, the inverter converts the AC power generated by the motor 31 (regenerative power) to DC power and supplies the DC power to the battery 32. When the power stored in the battery 32 is supplied to the motor 31, the boost converter boosts the voltage of the battery 32 in accordance with need. The DC/DC converter lowers the voltage of the battery 32 when the power stored in the battery 32 is supplied to headlights or other electronic equipment.

The power reception device 5 supplies power received from the power transmission device 4 to the battery 32. The power reception device 5 has a power reception side resonance circuit 51, power reception side rectifying circuit 54, and charging circuit 55.

The power reception side resonance circuit 51 is arranged at the bottom part of the vehicle 3 so that the distance from the road surface becomes smaller. The power reception side resonance circuit 51 has a configuration similar to the power transmission side resonance circuit 43 and has a resonator comprised of a coil 52 and capacitor 53. The various parameters of the coil 52 and capacitor 53 (outside diameter and inside diameter of the coil 52, number of turns of the coil 52, electrostatic capacity of the capacitor 53, etc.) are determined so that the resonance frequency of the power reception side resonance circuit 51 matches with the resonance frequency of the power transmission side resonance circuit 43. Note that, if the amount of deviation of the resonance frequency of the power reception side resonance circuit 51 and the resonance frequency of the power transmission side resonance circuit 43 is small, for example, if the resonance frequency of the power reception side resonance circuit 51 is within a range of ±20% of the resonance frequency of the power transmission side resonance circuit 43, the resonance frequency of the power reception side resonance circuit 51 does not necessarily have to match the resonance frequency of the power transmission side resonance circuit 43.

When the power reception side resonance circuit 51 is facing the power transmission side resonance circuit 43 and an AC magnetic field is generated by the power transmission side resonance circuit 43, the vibration of the AC magnetic field is transmitted to the power reception side resonance circuit 51 resonating by the same resonance frequency as the power transmission side resonance circuit 43. As a result, an induced current flows to the power reception side resonance circuit 51 by electromagnetic induction and an induced electromotive force is generated at the power reception side resonance circuit 51 by the induced current. That is, the power transmission side resonance circuit 43 transmits power to the power reception side resonance circuit 51, while the power reception side resonance circuit 51 receives power from the power transmission side resonance circuit 43.

The power reception side rectifying circuit 54 is electrically connected to the power reception side resonance circuit 51 and charging circuit 55. The power reception side rectifying circuit 54 rectifies the AC power supplied from the power reception side resonance circuit 51, converts it to DC power, and supplies the DC power to the charging circuit 55. The power reception side rectifying circuit 54 is, for example, an AC/DC converter.

The charging circuit 55 is electrically connected to the power reception side rectifying circuit 54 and battery 32. In particular, it is connected to the battery 32 through a relay 38. The charging circuit 55 convert the DC power supplied from the power reception side rectifying circuit 54 to the voltage level of the battery 32 and supplies it to the battery 32. The battery 32 is charged if the power transmitted from the power transmission device 4 is supplied by the power reception device 5 to the battery 32. The charging circuit 55 is, for example, a DC/DC converter.

The vehicle controller 34 performs various control over the vehicle 3. For example, the vehicle controller 34 is electrically connected to the charging circuit 55 of the power reception device 5 and controls the charging circuit 55 to control the charging of the battery 32 by the power transmitted from the power transmission device 4. Further, the vehicle controller 34 is electrically connected to the PCU 33 and controls the PCU 33 to control the transfer of power between the battery 32 and the motor 31. Furthermore, the vehicle controller 34 controls the vehicle side communication device 72.

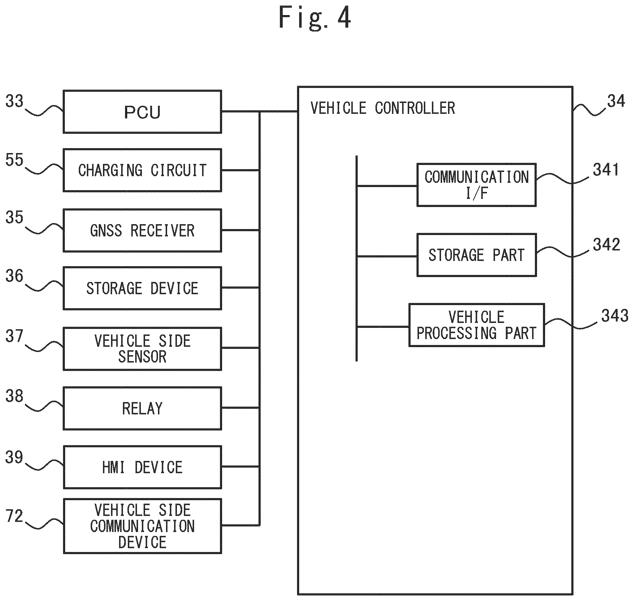

FIG. 4 is a schematic view of the configuration of the vehicle controller 34 and equipment connected to the vehicle controller 34.

The vehicle controller 34 has a communication interface 341, storage part 342, and vehicle processing part 343. The communication interface 341, storage part 342, and vehicle processing part 343 are connected with each other through signal wires.

The communication interface 341 has an interface circuit for connecting the vehicle controller 34 to an internal network based on the CAN or the standard. The vehicle controller 34 communicates with other equipment through the communication interface 341.

The storage part 342 has an HDD or SSD, optical recording medium, semiconductor memory, or other storage medium and stores the various computer programs, data, etc. used for processing at the vehicle processing part 343.

The vehicle processing part 343 has one or more CPUs (central processing units) and their peripheral circuits. The vehicle processing part 343 runs the various computer programs stored in the storage part 342 and exerts comprehensive control over the overall operations of the vehicle 3. It is, for example, a processor.

Further, the vehicle 3 is further provided with a GNSS receiver 35, storage device 36, a plurality of vehicle side sensors 37, the relay 38, and an HMI device 39. The GNSS receiver 35, storage device 36, vehicle side sensors 37, relay 38, and HMI device 39 are electrically connected to the vehicle controller 34 through the internal network.

The GNSS receiver 35 detects the current position of the vehicle 3 (for example, the latitude and longitude of the vehicle 3) based on positioning information obtained from a plurality of (for example, three or more) positioning satellites. The output of the GNSS receiver 35, that is, the current position of the vehicle 3 detected by the GNSS receiver 35, is transmitted to the vehicle controller 34.

The storage device 36 stores data. The storage device 36 is, for example, provided with an HDD, SSD (solid state drive), or optical recording medium. In the present embodiment, the storage device 36 stores map information. The map information includes, in addition to information relating to roads, information on installation positions of the ground power supply apparatuses 2 and other information. The vehicle controller 34 acquires map information from the storage device 36. Note that, the storage device 36 need not contain map information. In that case, the vehicle controller 34 may acquire map information from outside the vehicle 3 (for example, the server 1) through the vehicle side communication device 72.

The vehicle side sensors 37 detect the state of the vehicle 3. In the present embodiment, the vehicle side sensors 37 include, as sensors for detecting the state of the vehicle 3, a speed sensor for detecting the speed of the vehicle 3, a battery temperature sensor for detecting the temperature of the battery 32, a power reception device temperature sensor for detecting the temperature of the various parts of the power reception device 5 (in particular, the power reception side resonance circuit 51 and power reception side rectifying circuit 54), a battery current sensor for detecting a charging current value and discharging current value of the battery 32, a power reception device current sensor for detecting the current flowing to the various parts of the power reception device 5, and a power reception device voltage sensor for detecting the voltage applied to the various parts of the power reception device 5. The outputs of the vehicle side sensors 37 are input to the vehicle controller 34.

The relay 38 is arranged between the battery 32 and the power reception device 5 and connects and disconnects the battery 32 and the power reception device 5. When the relay 38 is connected, the power which the power reception device 5 receives is supplied to the battery 32. However, when the relay 38 is disconnected, current does not flow from the power reception device 5 to the battery 32 and accordingly the power reception device 5 can substantially no long receive power.

The HMI device 39 is an interface for transferring information with occupants of the vehicle. The HMI device 39 according to the present embodiment is provided with a display and speaker for providing the vehicle occupants with various types of information and a touch panel (or operating buttons) for the vehicle occupants to enter information. The HMI device 39 transmits input information entered by the vehicle occupants through the internal network to various devices requiring that input information (for example, the vehicle controller 34) and provides the vehicle occupants with the information received through the internal network by showing it on the display etc.

In this regard, in the noncontact power supply system 100, the amount of electric power transmitted by the ground power supply apparatus side and the amount of electric power received by the vehicle side do not always match, so if trying to calculate the fee for system utilization when utilizing the noncontact power supply system 100 (money, points, tickets, or other consideration for system utilization, including electricity fees, to be paid by system user) in accordance with the amount of electric power utilized by the system user, there is the problem of whether to make the amount of electric power utilized the amount of electric power transmitted or make it the amount of electric power received and also the problem that inherently it is difficult to obtain an accurate grasp of the amount of electric power utilized. Therefore, how to calculate the fee for system utilization when utilizing the noncontact power supply system 100 becomes a problem.

Further, even if calculating the fee for system utilization in accordance with the amount of electric power transmitted to the vehicle 3, the following problem arises. That is, the amount of electric power received by the vehicle 3 becomes smaller than the amount of electric power transmitted in accordance with the efficiency of transmission when transmitting electric power by noncontact from the ground power supply apparatus 2 to a running vehicle. For this reason, if calculating the fee for system utilization in accordance with the amount of electric power transmitted to the vehicle 3, a fee corresponding to an amount of electric power greater than the amount of electric power received ends up constantly being billed to the system user.

Further, even if calculating the fee for system utilization in accordance with the amount of electric power received by the vehicle 3, the following problem arises. That is, the efficiency of transmission when transmitting electric power by noncontact from the ground power supply apparatus 2 to a running vehicle is not necessarily constant. For example, it changes depending on the state of the power reception device 5 mounted in the vehicle 3, the running line of the vehicle 3, etc. Specifically, when the performance of the power reception device 5 falls due to aging, when running not at the center of the lane, but offset leaning to either the left or right direction from the center of the lane or otherwise running at an unsuitable running line, the efficiency of transmission falls from the usual level.

Therefore, if calculating the fee for system utilization in accordance with the amount of electric power received by the vehicle 3, even if the vehicle side causes the efficiency of transmission to fall from the usual level and as a result the ratio of the amount of electric power received to the amount of electric power transmitted falls from the usual level, only a fee for system utilization calculated in accordance with the amount of electric power received can be billed. In this way, it is unsuitable to only bill a fee for system utilization corresponding to the amount of electric power received despite the vehicle side causing the efficiency of transmission to fall from the usual level.

Therefore, in the present embodiment, the number of times the vehicle 3 utilizes the ground power supply apparatus 2 and in turn the noncontact power supply system 100 (below, referred to as the "number of times of system utilization") is calculated based on the number of times the ground power supply apparatus 2 is operated and power is transmitted to the vehicle 3 (below, referred to as the "power transmission count") and the fee for system utilization is calculated based on the number of times of system utilization.

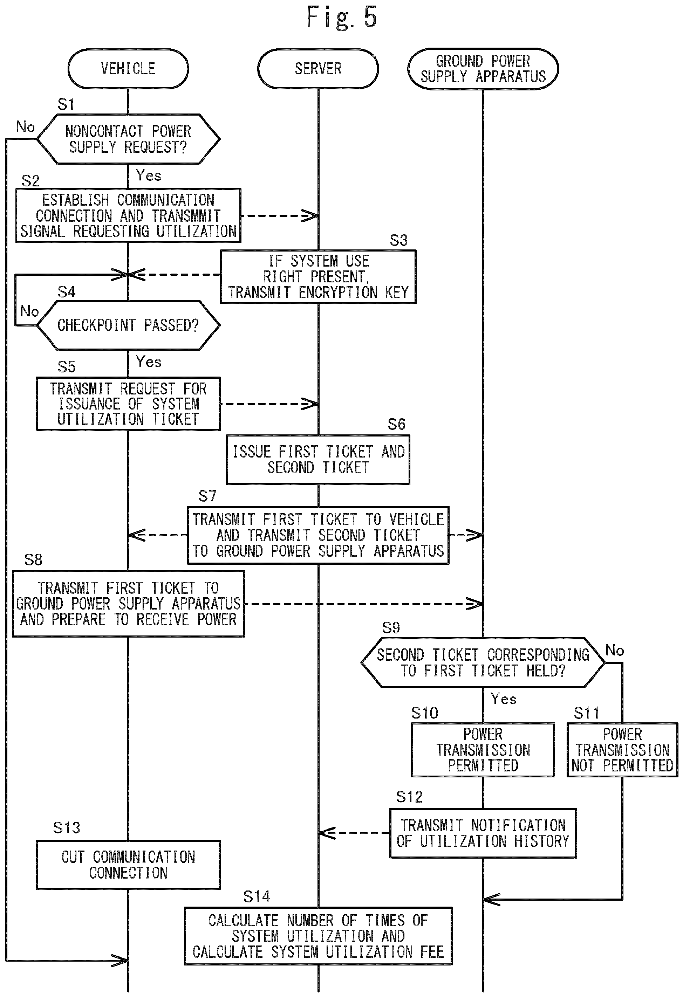

FIG. 5 is an operation sequence diagram for explaining a method of calculation of a fee for system utilization according to the present embodiment.

At step S1, the vehicle controller 34 judges whether the vehicle 3 in which that vehicle controller 34 is mounted (host vehicle) is requesting noncontact power supply. If the host vehicle 3 is requesting noncontact power supply, the vehicle controller 34 proceeds to the processing of step S2. On the other hand, if the host vehicle 3 is not requesting noncontact power supply, the processing vehicle controller 34 ends the processing. In the present embodiment, the vehicle occupants are made able to manually switch between requesting noncontact power supply or not through the HMI device 39, but the invention is not limited to this. For example, it also possible to automatically switch between requesting noncontact power supply or not in accordance with the state of charge of the battery 32.

At step S2, the vehicle controller 34, for example, performs a three-way handshake to establish communication connection with the server 1, then transmits to the server 1 a signal requesting utilization of the noncontact power supply system 100. This signal requesting utilization includes, for example, various information required for utilizing the noncontact power supply system 100 (for example authentication information etc.)

At step S3, the server 1 confirms whether the vehicle 3 originating the signal requesting utilization has the right to utilize the noncontact power supply system 100 based on the authentication information etc. and transmits to the confirmed vehicle 3 an encryption key for decrypting an encrypted system utilization ticket explained later.

At step S4, the vehicle controller 34 judges whether a checkpoint set at a point before the electrified road section has been passed. If the checkpoint has been passed, the vehicle controller 34 proceeds to the processing of step S5. On the other hand, if the checkpoint has not been passed, the vehicle controller 34 again judges if the checkpoint has been passed after the elapse of a predetermined time.

As to whether or not the checkpoint has been passed, whether or not the checkpoint has been passed can be judged, for example, by the vehicle controller 34 receiving a signal generated from a gate if a gate is set at the checkpoint. At this time, the vehicle controller 34 can receive information relating to the checkpoint, including position information of the checkpoint passed etc., from the gate. Further, for example, if information relating to the checkpoint is included in map information in the storage device 36 or if information relating to the checkpoint can be received from the server 1, it is possible to judge whether the checkpoint has been passed based on the position information of the host vehicle 3 and the position information of the checkpoint. In this way, the method for judging whether the checkpoint has been passed is not particularly limited.

Note that, in the present embodiment, at this step S4, whether the checkpoint has been passed is judged, but the invention is not limited to this. For example, whether the checkpoint has been approached may also be judged.

Whether the checkpoint has been approached can, for example, by judged by the vehicle controller 34 receiving a signal generated from an apparatus transmitting a signal to a vehicle 3 positioned within a certain fixed range based on the checkpoint if such an apparatus is installed at the checkpoint. The invention is not limited to this. This can also be judged based on the position information of the host vehicle 3 and the position information of the checkpoint. The certain fixed range based on the checkpoint can, for example, be made a partial road section before entering an electrified road section if a road section of a predetermined range where a signal change is awaited so as to enable a vehicle awaiting a signal change to be supplied with power by noncontact is an electrified road section.

At step S5, the vehicle controller 34 transmits to the server 1 a request for issuance of a virtual ticket for utilization of the noncontact power supply system 100 as a system utilization ticket together with identification information of the host vehicle and the checkpoint information.

At step S6, if receiving a request for issuance of a system utilization ticket, the server 1 identifies the vehicle 3 originating the request for issuance based on the identification information and issues a first ticket comprised of a system utilization ticket for transmission to the identified vehicle 3 originating the request for issuance and a unique system utilization ticket prepared for each vehicle 3 having the right to utilize the noncontact power supply system 100 and a second ticket comprised of a system utilization ticket corresponding to the first ticket and a system utilization ticket for transmission to a ground power supply apparatus 2.

At step S7, the server 1 transmits an encrypted first ticket to the vehicle 3 originating the request for issuance of the system utilization ticket and transmits the second ticket to each ground power supply apparatus 2 linked with the checkpoint. A "ground power supply apparatus 2 linked with the checkpoint" is a ground power supply apparatus 2 installed in an electrified road section which a vehicle 3 passing the checkpoint may run on. The server storage part 12 of the server 1 according to the present embodiment stores in advance the ground power supply apparatuses 2 linked with a checkpoint for each checkpoint.

At step S8, the vehicle controller 34 decrypts the received first ticket using the encryption key and controls the power reception device 5 so as to start periodic and direct transmission of the decrypted first ticket to the ground power supply apparatus 2 through the vehicle side communication device 72 by narrow area wireless communication and be able to receive power when the host vehicle 3 is running on the ground power supply apparatus 2.

At step S9, if receiving the first ticket by greater than or equal to a predetermined communication strength (strength of received signal), the power transmission controller 22 of the ground power supply apparatus 2 judges if it has already received from the server 1 a second ticket corresponding to the received first ticket, that is, if it holds a second ticket corresponding to the received first ticket. If holding a second ticket corresponding to the first ticket, the power transmission controller 22 proceeds to the processing of step S10. On the other hand, if not holding a second ticket corresponding to the first ticket, the ground power supply apparatus 2 proceeds to the processing of step S11.

At step S10, the power transmission controller 22 of the ground power supply apparatus 2 judges that the vehicle 3 which will run on or stop at the apparatus from then is an authorized power transmission vehicle obtaining permission of system use and controls the power transmission device 4 so as to be able to transmit electric power when that vehicle 3 is running on or stopped at the apparatus.

At step S11, the power transmission controller 22 of the ground power supply apparatus 2 judges that the vehicle 3 which will run on or stop at the apparatus from then is an unauthorized power transmission vehicle not obtaining permission of system use and controls the power transmission device 4 so as to not transmit electric power even if that vehicle 3 is running on or stopped at the apparatus.

At step S12, the power transmission controller 22 of the ground power supply apparatus 2 transmits to the server a notification of utilization history notifying that the apparatus has been utilized by the vehicle 3 if transmitting electric power to the vehicle 3 running on top of the apparatus. The notification of utilization history includes identification information of the vehicle 3 utilizing the apparatus, the number of times of utilization of the ground power supply apparatus 2 by the vehicle 3, and in turn the power transmission count for calculating the fee for system utilization of that vehicle 3.

The power transmission count may, for example, simply be made 1. Further, for example, it is possible to increase the count from 1 in accordance with the power transmission time period during which power is continuously transmitted to the vehicle 3 (in other words, the dwell time period during which the vehicle 3 is dwelling on the apparatus). This is because the longer the power transmission time period (dwell time period), also the greater the amount of electric power received of the vehicle 3.

Note that, the first ticket received from the vehicle 3 is a unique system utilization ticket prepared for each vehicle 3, so, in the present embodiment, information relating to the first ticket received from the vehicle 3 utilizing the apparatus is transmitted as identification information of the vehicle 3 utilizing the apparatus.

At step S13, the vehicle controller 34 cuts the communication connection with the server 1 if, for example, the start switch of the host vehicle is turned off and the host vehicle is stopped.

At step S14, if the communication connection with the vehicle 3 is cut, the server 1 cumulatively adds the power transmission counts included in the notification of utilization history of that vehicle 3 received from the ground power supply apparatus 2 which that vehicle 3 (vehicle cutting connection) utilized in the period from which the communication connection is established to when it is cut so as to calculate the number of times of system utilization of that vehicle 3. Further, the server 1 calculates the fee for system utilization of that vehicle 3 based on the number of times of system utilization. Further, the server 1 separately bills the calculated fee for system utilization to the user of the noncontact power supply system 100 (system utilizer) associated with the vehicle 3 transmitting of the number of times of system utilization.

In the present embodiment, the unit fee for each of the number of times of utilization is set in advance. The server 1 multiplies that unit fee with the number of times of system utilization to calculate the fee for system utilization. The unit fee is, for example, the electricity fee corresponding to a standard amount of electric power received per unit time when the vehicle 3 receives electric power from the ground power supply apparatus 2, but the invention is not limited to this.

The noncontact power supply system 100 according to the present embodiment explained above is comprised of a vehicle 3 (mobile unit), a ground power supply apparatus 2 configured to be able to supply power by noncontact to the vehicle 3, and a server 1 configured to be able to communicate with the vehicle 3 and the ground power supply apparatus 2 respectively. Further, the server 1 is configured so as to calculate a fee for system utilization of the noncontact power supply system 100 by the vehicle 3 based on the number of times of utilization of the ground power supply apparatus 2 by the vehicle 3.

As explained above, in the noncontact power supply system 100, it is possible to accurately obtain a grasp of the amount of electric power utilized when utilizing the system, but according to the present embodiment, it is possible to calculate the fee for system utilization in accordance with the number of times of utilization of the ground power supply apparatus 2. For this reason, it is possible to calculate the fee for system utilization by a simple method even if not accurately obtain a grasp of the amount of electric power utilized when utilizing the system.

Further, in the present embodiment, the server 1 is configured to calculate the fee for system utilization by multiplying a preset unit fee with the number of times of utilization. The unit fee is a fee corresponding to a standard amount of electric power received per unit time when the vehicle 3 receives electric power from the ground power supply apparatus 2.

Due to this, even if the vehicle causes the efficiency of transmission to fall from the usual level and as a result the ratio of the amount of electric power received to the amount of electric power transmitted to fall from the usual level, it is possible to bill a fee corresponding to a standard amount of electric power received, so it is possible to bill a suitable amount as the fee for system utilization. Further, it becomes impossible to bill the system user a fee corresponding to an amount of electric power greater than the amount of electric power received at all times.

Further, in the present embodiment, the ground power supply apparatus 2 is configured to transmit a notification of utilization history of the vehicle 3, including a power transmission count, to the server 1 if transmitting electric power to the vehicle 3 and is configured to calculate the power transmission count based on the power transmission time period during which transmitting power to the vehicle 3, while the server is configured to cumulatively add the power transmission count received from the ground power supply apparatus so as to calculate the number of times of utilization.

Due to this, for example, even when congestion, wait time for a traffic light to change, etc. causes a vehicle to dwell for a long time on the ground power supply apparatus, the power transmission count is suitably adjusted in accordance with the dwell time period (power transmission time period), therefore it is possible to bill a suitable fee for system utilization regardless of the running speed of the vehicle 3 (speed of passage over ground power supply apparatus).

Note that, the present embodiment, if changing the way of looking at it, can be grasped as a method of calculation of a utilization fee of a noncontact power supply system performed by a server 1 able to communicate with a vehicle 3 (mobile unit) and a ground power supply apparatus 2 supplying power by noncontact to the vehicle 3 respectively, the method of calculation of a utilization fee of a noncontact power supply system comprising a step of obtaining a grasp of the number of times of utilization of the ground power supply apparatus 2 by the vehicle 3 based on information received from at least one of the vehicle 3 or the ground power supply apparatus 2 and a step of calculating a fee for system utilization of the noncontact power supply system 100 by the vehicle 3 based on the number of times of utilization.

### (Second Embodiment)

Next, a second embodiment of the present invention will be explained. This embodiment differs from the first embodiment on the point that the number of times of system utilization is calculated based on not the power transmission count, but the number of times the vehicle 3 receives power from the ground power supply apparatus 2 by the power reception device 5 (below, referred to as the "power reception count"). Below, this point of difference will be focused on in the explanation.

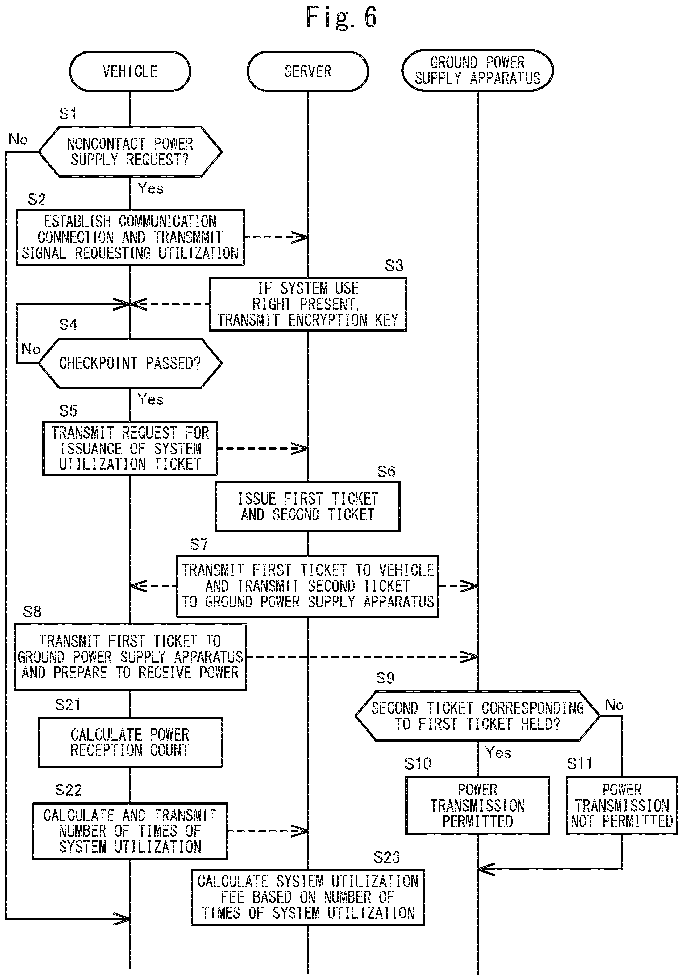

FIG. 6 is an operation sequence diagram explaining the method for calculation of the fee for system utilization according to the present embodiment. Note that, in FIG. 6, the contents of the processing from step S1 to step S11 are similar to the first embodiment, so explanations will be omitted here.

At step S21, if receiving electric power from the ground power supply apparatus 2, the vehicle controller 34 calculates the power reception count for calculating the number of times of system utilization by the host vehicle 3. The power reception count may, for example, simply be 1. Further, for example, the count may be increased from 1 in accordance with the time period during which the host vehicle 3 continuously receives electric power from the ground power supply apparatus 2 (the dwell time during which the host vehicle 3 dwells over the ground power supply apparatus).

At step S22, if for example the start switch of the host vehicle 3 is turned off and the host vehicle 3 is stopped, the vehicle controller 34 cumulatively adds the power reception count from which the communication connection with the server 1 is established to calculate the number of times of system utilization of the host vehicle 3. Further, the vehicle controller 34 transmits the number of times of system utilization of the host vehicle 3 to the server 1 and cuts the communication connection with the server 1.

At step S23, if receiving the number of times of system utilization, the server 1 calculates the fee for system utilization of the vehicle 3 transmitting the number of times of system utilization based on the received number of times of system utilization. Further, the server 1 bills the calculated fee for system utilization to the user of the noncontact power supply system 100 (system user) associated with the vehicle 3 transmitting the number of times of system utilization.

According to the present embodiment explained above, if receiving electric power from the ground power supply apparatus 2, the vehicle 3 is configured to calculate the power reception count and cumulatively add the power reception count to thereby calculate the number of times of system utilization and transmit it to server 1. Alternatively, the vehicle 3 is configured to calculate the power reception count based on the power reception time period during which it received electric power from the ground power supply apparatus 2.

In this way, even if calculating the number of times of system utilization not by the power transmission count, but by the power reception count, an effect similar to the first embodiment can be obtained. Further, the count is calculated based on the vehicle side, so it is possible to keep the count from ending up being increased even if not actually receiving power.

### (Third Embodiment)

Next, a third embodiment of the present invention will be explained. This embodiment differs from the above embodiments on the point that the present embodiment calculates the number of times of system utilization based on the power transmission count and power reception count. Below, this point of difference will be focused on in the explanation.

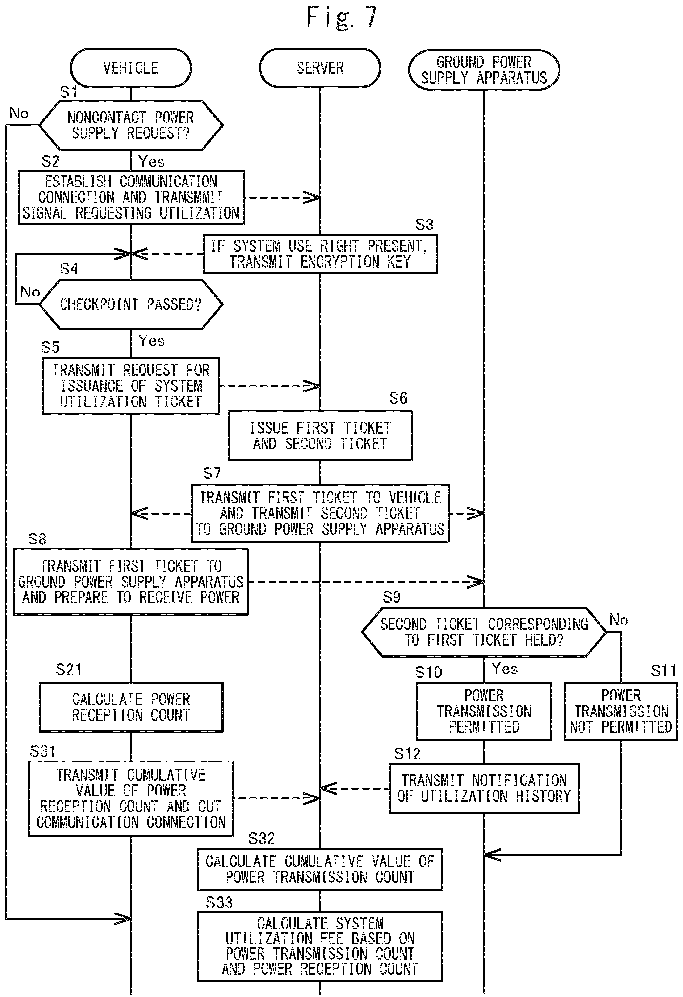

FIG. 7 is an operation sequence diagram explaining the method for calculation of the fee for system utilization according to the present embodiment. Note that, in FIG. 7, the contents of the processing from step S1 to step S12 and the contents of the processing of step S21 are similar to the first embodiment and second embodiment, so explanations will be omitted here.

At step S31, if for example the start switch of the host vehicle 3 is turned off and the host vehicle 3 is stopped, the vehicle controller 34 cumulatively adds the power reception count from when the communication connection with the server 1 is established. Further, the vehicle controller 34 transmits the cumulative value of the power reception count of the host vehicle 3 to the server 1 and cuts the communication connection with the server 1.

At step S32, if the communication connection with the vehicle 3 is cut, the server 1 calculates the cumulative value of the power transmission counts included in the notification of utilization history of that vehicle 3 received from the ground power supply apparatus 2 which that vehicle 3 (vehicle cutting connection) utilized in the period from which the communication connection is established to when it is cut.

At step S33, the server 1 calculates the number of times of system utilization of the vehicle 3 based on the cumulative value of the power transmission count and the cumulative value of the power reception count to calculate the fee for system utilization.

In the present embodiment, if the cumulative values of the power transmission count and power reception count are the same, the server 1 calculates the number of times of system utilization based on either of the cumulative values. If the cumulative values of the power transmission count and power reception count are different, it calculates the number of times of system utilization based on the cumulative value of the power reception count so as to calculate the fee for system utilization based on the vehicle side power reception count.

Note that, the method of calculation of the number of times of system utilization is not limited to such a method. For example, if the cumulative values of the power transmission count and power reception count are different, it is also possible to calculate the number of times of system utilization based on the cumulative value of the power transmission count. Further, for example, it is also possible to calculate the number of times of system utilization based on the average value of the cumulative values of the power transmission count and power reception count.

In this way, even if calculating the number of times of system utilization based on the cumulative value of the power transmission count and cumulative value of the power reception count, it is possible to obtain effects similar to the first embodiment. Further, if, like in the present embodiment, calculating the number of times of system utilization giving priority to the cumulative value of the power reception count, it is also possible to obtain the following such effects. That is, if calculating the number of times of system utilization giving priority to the cumulative value of the power transmission count, for example, even if the vehicle 3 can no longer actually receive power due to some reason or another, this might be counted in the power transmission count, therefore by calculating the number of times of system utilization giving priority to the cumulative value of the power reception count, it is possible keep the count from ending up being increased despite power not actually being received.

Above, embodiments of the present invention were explained, but the above embodiments just show some of the examples of application of the present invention and are not intended to limit the technical scope of the present invention to the specific constitutions of the above embodiments.

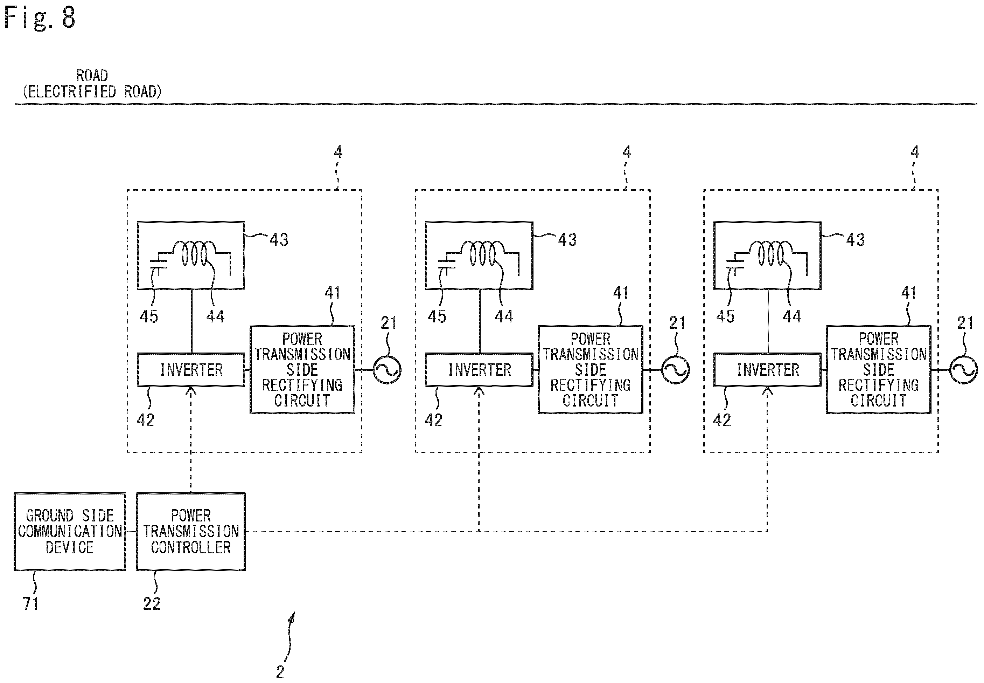

For example, in the above-mentioned embodiments, as shown in FIG. 8, the ground power supply apparatus 2 may, for example, be provided with a plurality of power transmission devices 4 controlled by a single power transmission controller 22. FIG. 8 shows the case where the ground power supply apparatus 2 is provided with three power transmission devices 4. In such a case, it is sufficient to increase the power transmission count separately for each power transmission device 4, add them together, and use that as the power transmission count of the ground power supply apparatus 2.

Further, in the first embodiment, if the communication connection with the vehicle 3 is cut, the server 1 cumulatively added the power transmission count included in the notification of utilization history of that vehicle 3 received from the ground power supply apparatus 2 which that vehicle 3 utilized in the period from when the communication connection is established to when it is cut so as to calculate the number of times of system utilization of that vehicle 3.

However, for example, if a checkpoint is set at the exit of the the electrified road section as well, the server 1 may cumulatively add the power transmission count included in the notification of utilization history of that vehicle 3 received from the ground power supply apparatus 2 which that vehicle 3 utilized in the period from when passing the checkpoint at the entry side to when passing the checkpoint at the exit side so as to calculate the number of times of system utilization of that vehicle 3.

## Claims

1. A noncontact power supply system comprising:
a mobile unit;
a ground power supply apparatus configured to be able to supply power by noncontact to the mobile unit; and
a server configured to be able to communicate with the mobile unit and the ground power supply apparatus respectively, wherein
the server is configured to:
obtain a grasp of the number of times of utilization of the ground power supply apparatus by the mobile unit based on information received from at least one of the mobile unit or the ground power supply apparatus; and
calculate a fee for system utilization of the noncontact power supply system by the mobile unit based on the number of times of utilization.

2. The noncontact power supply system according to claim 1, wherein
the ground power supply apparatus is configured to transmit a notification of utilization history of the mobile unit, including a power transmission count, to the server if transmitting electric power to the mobile unit and
the server is configured to cumulatively add the power transmission count received from the ground power supply apparatus so as to calculate the number of times of utilization.

3. The noncontact power supply system according to claim 2, wherein
the ground power supply apparatus is configured to calculate the power transmission count based on a power transmission time period during which power is continuously transmitted to the mobile unit.

4. The noncontact power supply system according to claim 1, wherein
the mobile unit is configured to:
calculate a power reception count if receiving electric power from the ground power supply apparatus; and
transmit to the server the number of times of utilization calculated by cumulatively adding the power reception count.

5. The noncontact power supply system according to claim 4, wherein
the mobile unit is configured to calculate the power reception count based on a power reception time period during which electric power is continuously received from the ground power supply apparatus.

6. The noncontact power supply system according to claim 1, wherein
the ground power supply apparatus is configured to calculate a power transmission count if transmitting power to the mobile unit,
the mobile unit is configured to calculate a power reception count if receiving power from the ground power supply apparatus, and
the server is configured to configured to calculate the number of times of utilization based on a cumulative value of the power transmission count and a cumulative value of the power reception count.

7. The noncontact power supply system according to claim 6, wherein
the server is configured to calculate a fee for system utilization based on the number of times of utilization calculated based on the power reception count if the cumulative value of the power transmission count and the cumulative value of the power reception count differ.

8. The noncontact power supply system according to claim 6, wherein
the server is configured to calculate a fee for system utilization based on the number of times of utilization calculated based on an average value of the cumulative value of the power transmission count and the cumulative value of the power reception count.

9. The noncontact power supply system according to any one claim of claim 1 to claim 8, wherein the server is configured to calculate the fee for system utilization by multiplying a preset unit fee with the number of times of utilization.

10. The noncontact power supply system according to claim 9, wherein
the unit fee is a fee corresponding to a standard amount of electric power received per unit time when the mobile unit receives electric power from the ground power supply apparatus.

11. The noncontact power supply system according to any one of claim 1 to claim 10, wherein
the server is configured to charge the fee for system utilization to a user of the noncontact power supply system associated with the mobile unit.

12. A server comprising:
a processing part; and
a communication part configured to communicate with a mobile unit and ground power supply apparatus forming a noncontact power supply system respectively, wherein
the processing part is configured to:
obtain a grasp of the number of times of utilization of the ground power supply apparatus by the mobile unit based on information received from at least one of the mobile unit or the ground power supply apparatus; and
calculate a fee for system utilization of the noncontact power supply system by the mobile unit based on the number of times of utilization.

13. A method of calculation of a utilization fee of a noncontact power supply system performed by a server able to communicate with a mobile unit and a ground power supply apparatus supplying power by noncontact to the mobile unit respectively,
the method of calculation of a utilization fee of a noncontact power supply system comprising:
a step of obtaining a grasp of the number of times of utilization of the ground power supply apparatus by the mobile unit based on information received from at least one of the mobile unit or the ground power supply apparatus; and
a step of calculating a fee for system utilization of the noncontact power supply system by the mobile unit based on the number of times of utilization.
